(19) Europäisches Patentamt
European Patent Office
Office européen des brevets

(11) Numéro de publication: **0 359 604**
**A1**

(12) # DEMANDE DE BREVET EUROPEEN

(21) Numéro de dépôt: **89402203.7**

(22) Date de dépôt: **03.08.89**

(51) Int. Cl.5: **C 08 G 77/62**
C 08 G 77/54, C 04 B 35/00

(30) Priorité: **17.08.88 FR 8810952**

(43) Date de publication de la demande:
**21.03.90 Bulletin 90/12**

(84) Etats contractants désignés:
**AT BE CH DE ES FR GB GR IT LI LU NL SE**

(71) Demandeur: **ATOCHEM**
**4 & 8, Cours Michelet La Défense 10**
**F-92800 Puteaux (FR)**

(72) Inventeur: **Colombier, Christian**
**3, rue de Sèze**
**F-69006 Lyon (FR)**

(74) Mandataire: **Rochet, Michel et al**
**ATOCHEM Département Propriété Industrielle**
**F-92091 Paris la Défense Cédex 42 (FR)**

(54) **Procédé de préparation de polyhydrosilazanes dérivés d'hydrazine et l'utilisation desdits silazanes comme précurseurs de céramique.**

(57) L'invention concerne un procédé de préparation de polysilazanes comportant des motifs de formule - SiH - N - N -.

Ce procédé consiste à faire réagir dans un premier temps un halogénosilane avec de l'ammoniac puis à faire réagir l'ammonolysat obtenu avec une hydrazine.

Ce procédé permet d'économiser l'hydrazine et de conduire à des polyhydrosilazanes de haute viscosité.

EP 0 359 604 A1

## Description

## PROCEDE DE PREPARATION DE POLYHYDROSILAZANES DERIVES D'HYDRAZINE ET L'UTILISATION DESDITS SILAZANES COMME PRECURSEURS DE CERAMIQUES

L'invention a pour objet un nouveau procédé de préparation de polysilazanes comprenant des motifs 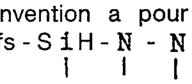 ci-après dénommés polyhydrosilazanes.

On a déjà proposé (brevet français 2 190 764) de préparer des polysilazanes en faisant réagir un halogénosilane avec un composé portant un ou plusieurs groupements $NH_2$ ou NH.

Bien que l'illustration ne porte que sur l'utilisation d'amine et plus précisément de méthylamine, ce document propose un grand nombre de composés à groupement $NH_2$ ou NH, parmi lesquels on trouve mention des hydrazines. Dans ce cas particulier de l'hydrazine, on se trouve donc avec $CH_3$ HSi $Cl_2$ en présence d'une réaction du type :

$CH_3$ HSi $Cl_2$ + 4 $NH_2$ $NH_2$ $\rightarrow$ $CH_3$ $SiH(NH\text{-}NH_2)_2$ + 2$NH_2$ $NH_2$ - HCl

Autrement dit la formation de l' hydrazinosilazane ou cyclosilazane $(CH_3\ HSi\ NH\text{-}NH)_n$ s'accompagne de la formation d'un nombre de moles de chlorhydrate d'hydrazine sensiblement égal au nombre de moles d'hydrazine fixées sur l'atome de silicium par substitution du chlore. Compte tenu du prix de l'hydrazine, il apparaît alors nécessaire de séparer le chlorhydrate d'hydrazine et de récupérer l'hydrazine elle-même, généralement par addition de soude suivie d'une distillation azéotropique ou d'une cristallisation de zone.

Il a maintenant été trouvé un procédé de préparation de polyhydrosilazanes dérivés d'hydrazine c'est-à-dire renfermant une pluralité de motifs de formule

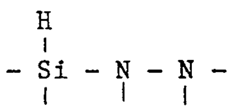 (I) et 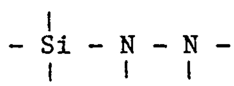 (II)

et éventuellement des motifs

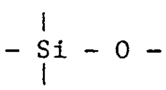 (III) et/ou 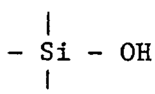 (IV)

dans lesquelles les valences disponibles des atomes de silicium et d'azote peuvent être liées à un atome d'hydrogêne, un radical hydrocarboné aliphatique saturé ou insaturé ou un radical aryle mono- ou polycyclique, alkylaryle ou arylalkyle, ce procédé étant caractérisé en ce qu'il consiste à :

a) préparer un polysilazane renfermant des motifs de formule

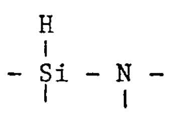 (V)

b) faire réagir ledit polysilazane avec une hydrazine de formule

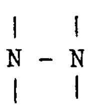 (VI)

et éventuellement de l'eau pour obtenir des produits renfermant lesdits motifs de formules(I) et/ou (II) et éventuellement (III) et/ou (IV).

L'expression "valences disponibles" est utilisée présentement pour tenir compte des liaisons entre les motifs des formules I, II, III et IV dans les enchaînements polymériques.

A titre d'exemples spécifiques des radicaux pouvant substituer les atomes de silicium et d'azote dans les formules précédentes, on citera en particulier, outre l'hydrogène, les radicaux hydrocarbonés aliphatiques saturés renfermant de 1 à 8 atomes de carbone ; les radicaux insaturés tels que vinyle, allyle ; les radicaux alicycliques renfermant de 3 à 7 atomes de carbone ; les radicaux phényle, benzyle, phényléthyle, tolyle, xylyle ou naphtyle.

D'une manière préférentielle, les atomes de silicium portent des substituants méthyle, éthyle, vinyle ou phényle, les atomes d'azote portant des atomes d 'hydrogène.

Pour la préparation du polysilazane renfermant des motifs de formule V on peut avantageusement faire réagir un hydrogénohalosilane avec de l'ammoniac ou une amine primaire.

On peut notamment utiliser un ou plusieurs hydrogénohalosilane(s) de formule

H $Si(Y)_a$ (VII)

dans laquelle Y représente un atome d'halogène et notamment un atome de chlore et a = 1 ou 2 et de préférence 2.

A titre d'exemples spécifiques des halogénosilanes de formule (VII), on citera notamment les produits répondant aux formules suivantes :
$H_2SiCl_2$, $(CH_3)_2HSiCl$, $HSiCl_3$, $(CH_3)HSiCl_2$.

On peut cependant ajouter à ces halogénosilanes des produits exempts d'hydrogène lié au silicium tels que :
$SiCl_4$, $(CH_3)_2SiCl_2$, $(CH_3)_3SiCl$
$CH_3SiCl_3$, $(C_6H_5)_2SiCl_2$, $(C_6H_5)(CH_3)SiCl_2$
$CH_3(CH_2=CH)SiCl_2$,$(CH_3)_2(CH_2=CH)$ SiCl.

Il ressort de la signification donnée à titre préférentiel pour a qu'on utilise avantageusement dans l'invention un ou plusieurs dihalogénosilanes ou un mélange comprenant un ou des dihalogénosilanes et un mono- ou un trihalogénosilane et/ou $SiCl_4$. Le pourcentage d'atomes de chlore apportés par le trihalogénosilane dans le mélange avec le dihalogénosilane n'excède de préférence pas 70 %. Dans le cas de monohalogénosilane ou de $SiCl_4$, ce pourcentage n'excède de préférence pas 30 %.

A titre d'illustration des amines primaires utilisables on peut citer notamment la méthylamine, l'éthylamine, la cyclohexylamine, l'aniline.

Au cours de cette première étape, on met avantageusement en oeuvre une quantité d'ammoniac et/ou d'amine telle que le nombre de moles d'ammoniac et/ou d'amine soit supérieur au nombre de moles d'atomes d'halogène Y additionné au nombre de moles d'atomes de silicium.

Cet excès peut atteindre 50 %. L'ammoniac et/ou l'amine sont avantageusement mis en oeuvre sous forme diluée, par exemple, au moyen d'azote. La réaction peut se faire à une température pouvant être comprise entre - 20°C et 200°C ou la température d'ébullition du solvant éventuel, lorsque cette température est inférieure à 200°C à pression atmosphérique. On peut également opérer à pression subatmosphérique ou superatmosphérique.

La réaction est avantageusement conduite en milieu solvant organique. Comme exemple de tels solvants, on peut citer notamment les hydrocarbures, éventuellement chlorés, tels que le chlorure de méthylène, le chloroforme, le tétrachlorure de carbone, le toluène, le benzène ou les éthers tels que l'éther diéthylique ou l'éther diisopropylique.

Au cours de cette réaction, l'acide halohydrique formé précipite sous forme d'halogénure d'ammonium qui peut être éliminé par filtration. Le solvant du polysilazane peut être éliminé par évaporation.

D'une manière générale, on recueille à l'issue de cette réaction, qui peut durer de quelques dizaines de minutes à quelques heures un polysilazane cyclique ou linéaire renfermant des motifs de formule (V), de viscosité relativement faible, c'est-à-dire de l'ordre de quelques dixièmes de poises à quelques poises.

La deuxième étape du procédé conforme à l'invention consiste à faire réagir le polysilazane formé au cours de l'étape précédente avec une hydrazine de forme (VI).

A titre d'exemples spécifiques des hydrazines de formule (VI) on citera notamment l'hydrazine non substituée ($N_2H_4$), la méthylhydrazine, l'éthylhydrazine, la phénylhydrazine, la cyclohexylhydrazine, la diméthyl- hydrazine, la diéthyl- hydrazine, la diphényl- hydrazine, la dibenzyl- hydrazine, l'α-naphtylhydrazine, la diisopropyl- hydrazine, les ditolyl- hydrazines, la di-isobutyl- hydrazine, la (diméthyl-2,3 phényl) hydrazine, la di(α-naphtyl)-1,2 hydrazine.

On peut utiliser dans l'invention un mélange comprenant plusieurs hydrazines et notamment plusieurs des produits spécifiquement cités. On utilise avantageusement l'hydrazine $N_2H_4$.

D'une manière générale, on met en oeuvre une quantité d'hydrazine et éventuellement d'eau suffisante pour permettre la substitution des groupements - $\underset{|}{N}$ - dans la formule (V) par les groupements - $\underset{|}{N}$ - $\underset{|}{N}$ - et les radicaux - O - et OH des formules (I), (II), (III) et (IV).

On peut cependant ne substituer qu'une partie des groupements - $\underset{|}{N}$ - dans la formule (V) et former par conséquent des polysilazanes comportant à la fois des motifs de formule (V) et des motifs des formules (I) et (II) et éventuellement (III) et/ou (IV).

Ces nouveaux polyhydrosilazanes constituent un autre objet de l'invention.

Dans l'hypothèse d'une substitution totale ou quasi totale des groupements - $\underset{|}{N}$ - précités, on utilise avantageusement un excès d'hydrazine de formule (VI), excès pouvant représenter plusieurs fois la quantité théorique nécessaire pour cette substitution.

L'hydrazine de formule (VI) peut être mise en oeuvre sous forme anhydre ou sous forme hydratée ou encore sous forme de solution aqueuse et la température de la réaction peut varier par exemple entre 20 et 150°C, sous pression atmosphérique. Lorsqu'on met en oeuvre de l'eau, on préfère ne pas dépasser une mole d'eau par mole d'hydrazine. La réaction s'accompagne d'un dégagement d'ammoniac et/ou d'amine et d'hydrogène, selon un schéma réactionnel, donné à titre purement indicatif et qui ne saurait en aucun cas limiter la portée de l'invention :

$$(1)\ \equiv Si\ N = + \gt N_2\ H_2 \longrightarrow \equiv Si - \underset{|}{N} - \underset{|}{N} - + H_2N- \nearrow$$

$$(2)\ \equiv Si\ H + H\text{-}N\lt \longrightarrow \equiv Si - N\ + H_2 \nearrow$$

ces deux réactions étant quasi simultanées.

La cessation des dégagements gazeux précités marque la fin de la réaction, au bout d'une période pouvant durer de quelques dizaines de minutes à quelques heures. Il est avantageux d'introduire dans le milieu réactionnel un solvant organique, pouvant par exemple être choisi parmi les produits cités précédemment. Après décantation de la phase lourde, contenant l'excès d'hydrazine n'ayant pas réagi et l'évaporation du solvant, on recueille un polyhydrosilazane renfermant une pluralité de motifs de formules (I) et (II) sous forme de liquide visqueux (viscosité pouvant aller de quelques poises à plusieurs centaines voire milliers de poises).

Les polyhydrosilazanes peuvent ensuite être mis en forme à température ambiante ou après chauffage à une température pouvant atteindre 300°C, par exemple par filage au travers de filières de dimensions appropriées pour obtenir des filaments ayant un diamètre pouvant être compris entre 1 et 100 µm.

On peut également former, à partir desdits polyhydrosilazanes éventuellement mis en solution des revêtements sur des supports tels que métaux (silicium métallique, acier, molybdène, alliages riches en nickel), ou céramiques, l'épaisseur desdits revêtements pouvant par exemple être de l'ordre de 0,01 à 100 µm. Dans le cas où le revêtement contient un additif tel que poudres de carbure ou nitrure de silicium, cette épaisseur peut atteindre plusieurs millimètres.

Dans cette application de revêtement le polyhydrosilazane est de préférence utilisé en solution dans un solvant organique tel que le toluène à une concentration de l'ordre de 1 à 20 % en poids.

Indépendamment de son intérêt considérable au niveau de la consommation d'hydrazine, il faut noter que ce procédé en deux étapes permet, par comparaison avec un procédé ne mettant en oeuvre que de l'ammoniac, comme décrit par exemple dans le brevet français 2 197 829, d'obtenir un rendement en céramique très supérieur.

Les polyhydrosilazanes mis en forme peuvent ensuite être pyrolysés par chauffage à une température de l'ordre de 800 à 1500°C en céramique contenant Si, N et éventuellement C et/ou O.

La pyrolyse peut être conduite en atmosphère neutre, par exemple sous azote ou argon, ou en atmosphère d'ammoniac si l'on veut faire baisser la teneur en carbone de la céramique et même l'éliminer.

Les polyhydrosilazanes conformes à l'invention peuvent être obtenus avec des rendements élevés et peuvent eux-mêmes conduire à des céramiques avec des rendements généralement supérieurs à 60 %.

Les exemples suivants illustrent l'invention. La valeur de rendement en céramique (= poids de céramique obtenue/poids de précurseur engagé X 100) a été mesurée par analyse thermogravimétrique sans confinement et sous balayage d'azote. La montée en température était de 100°C/heure et était suivie d'un palier d'une heure de 1000°C, température maximale.

EXEMPLE 1

A - Synthèse d'un ammonolysat de $CH_3\ SiH\ Cl_2$

La réaction a lieu dans un réacteur double enveloppe, équipé d'un thermomètre, d'un système d'agitation et d'un condenseur (15°C).

Après purge du réacteur à l'azote, on y verse à 15°C 800 ml de toluène et 1,2 mole de $CH_3\ Si\ HCl_2$. On refroidit le réacteur à 2°C et introduit sous agitation 4,66 moles de $NH_3$ diluées avec 2,33 moles de $N_2$ en 6 heures à débit constant. Pendant la dernière heure, on élève la température du réacteur à 20°C. On laisse sous faible agitation à 15°C pendant 15 heures. On filtre le chlorure d'ammonium sous azote et on le lave par 2 fois 400 ml de toluène. On procède alors sur la solution d'ammonolysat à l'évaporation du solvant à 60°C sous vide à l'aide d'un évaporateur rotatif. On finit l'évaporation en laissant 1/2 heure à 60°C sous environ 5 mm de Hg. On recueille 56 g d'ammonolysat, ce qui correspond à un rendement de 79,1 % fondé sur la formation de motifs

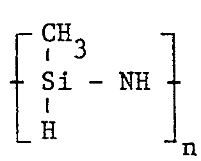

Cet ammonolysat, de viscosité ≃ 0,4 poises à 25°C présente un rendement en céramique de 42 %.

B - Substitution de l'ammonolysat obtenu sous A

On utilise 24,1 g de l'ammonolysat et l'on ajoute 13,06 g d'hydrazine anhydre. On agite le milieu émulsionnel et chauffe progressivement jusqu'à 70 °C en 30 mn sous balayage d'azote. On maintient cette température pendant 6 heures supplémentaires. On constate un important dégagement d'ammoniac et d'hydrogène dès le

début de la période de chauffage.

Au total, environ 0,15 mole de $NH_3$ se sont dégagées.

On ajoute environ 50 ml de toluène et on laisse l'émulsion décanter 15 heures dans une ampoule à décanter.

On soutire la phase lourde riche en hydrazine qui n'a pas réagi, soit environ 5,8 g et l'on procède à l'évaporation du toluène dans les conditions décrites à l'exemple 1. On récupère 26 g d'un polyhydrosilazane très visqueux (viscosité $>$ 10 000 poises à 25° C) et dont le rendement en céramique est de 68,7 %.

Exemple comparatif

On prend 23,5 g de l'ammonolysat préparé selon A dans l'exemple 1.

On agite et l'on chauffe progressivement jusqu'a 70° C en 30 mn sous balayage d'azote. On maintient cette température pendant 6 heures supplémentaires. On n'observe aucun dégagement d'ammoniac ni d'hydrogène.

On ajoute environ 50 ml de toluène et l'on procède à son évaporation dans les conditions décrites sous A. On récupère 23,4 g d'ammonolysat de viscosité $\simeq$ 0,4 poise et de rendement en céramique 44 %.

EXEMPLE 2

A - On prépare un ammonolysat de $CH_3$ Si $HCl_2$ comme décrit dans la partie A de l'exemple 1.

B - On prend 30,3 g de solution toluénique à 50 % en poids de cet ammonolysat et on ajoute 4,2 g d'hydrazine anhydre. On agite l'émulsion sous balayage d'azote et on porte la température du réacteur à 80° C pendant 5 heures.

On observe un dégagement d'ammoniac et d'hydrogène dès le début de la période de chauffage.

Au total 0,103 moles d'ammoniac se sont dégagées.

On procède à l' évaporation du toluène comme décrit à l'Exemple 1 et on recueille 16,5 g d'un polyhydrosilazane présentant une viscosité d'environ 250 poises à 25° C et un rendement en céramique de 67 %.

Le produit contient 58,6 % (en équivalent $N_2H_4$) de l'hydrazine engagée sous forme de liaison Si - N - N -

[ dosage effectué par hydrolyse acide (solution à 30 % en poids de $H_2SO_4$) pendant 1 heure à ébullition, addition d'iode $^N/_{10}$, addition d'acétate de sodium et d'eau, agitation, repos à température ambiante, dosage de l'iode non utilisée par solution $^N/_{10}$ de $Na_2$ $S_2$ $O_3X$].

Sur l'ammonolysat de l'étape A, cette méthode ne permet de déceler aucune liaison - Si - N - N -.

On note également que le rapport Si H (mesuré par I.R) qui est
Si $CH_3$
de 6 sur l'ammonolysat de la première étape n'est plus que de 4,5 dans le produit final.

**Revendications**

1. Procédé de préparation de polyhydrosilazanes renfermant une pluralité de motifs de formule

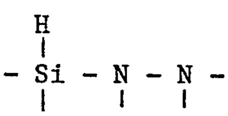 (I) et 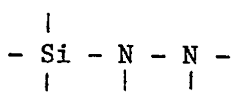 (II)

et éventuellement des motifs

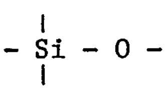 (III) et/ou 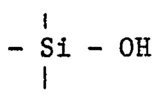 (IV)

dans lesquelles les valences disponibles des atomes de silicium et d'azote peuvent être liées à un atome d'hydrogène, un radical hydrocarboné aliphatique saturé ou insaturé ou un radical aryle mono- ou polycyclique, alkylaryle ou arylalkyle, ce procédé étant caractérisé en ce qu'il consiste à :

a) préparer un polysilazane renfermant des motifs de formule

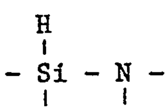 (V)

b) faire réagir ledit polysilazane avec une hydrazine de formule

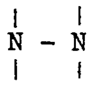

(VI)

et éventuellement de l'eau pour obtenir des produits renfermant lesdits motifs de formules (I) et/ou (II) et éventuellement (III) et/ou (IV).

2. Procédé selon la revendication 1, caractérisé en ce que le polysilazane renfermant des motifs de formule V est préparé par réaction d'un hydrogénohalosilane de formule
$H\,Si(Y)_a$ (VII)
dans laquelle Y représente un atome d'halogène et notamment un atome de chlore et a = 1 ou 2, avec de l'ammoniac et/ou une amine primaire.

3. Procédé selon l'une quelconque des revendications 1 et 2, caractérisé en ce que la quantité d'ammoniac et/ou d'amine mise en oeuvre est telle que le nombre de moles d'ammoniac et/ou d'amine soit supérieur au nombre de moles d'atomes d'halogène Y additionné au nombre de moles d'atomes de silicium.

4. Procédé selon l'une quelconque des revendications 1 à 3, caractérisé en ce que la réaction de l'halogénosilane avec l'ammoniac et/ou l'amine est conduite en milieu solvant organique.

5. Procédé selon l'une quelconque des revendications 1 à 4, caractérisé en ce que l'hydrazine de formule (VI) est choisie dans le groupe constitué par l'hydrazine non substituée, la méthylhydrazine, l'éthylhydrazine, la phénylhydrazine, la cyclohexylhydrazine, la diméthyl- hydrazine, la diéthyl- hydrazine, la diphényl- hydrazine, la dibenzyl- hydrazine, l'α-naphtylhydrazine, la diisopropyl- hydrazine, les ditolyl-hydrazines, la di-isobutyl- hydrazine, la (diméthyl-2,3 phényl) hydrazine, la di(α-naphtyl)- hydrazine.

6. Procédé selon l'une quelconque des revendications 1 à 5, caractérisé en ce que l'hydrazine et éventuellement l'eau est(sont) mise(s) en oeuvre en quantité suffisante pour permettre la substitution des groupements - NH - dans la formule (III) par les groupements - N - N -des formules (I) et (II) et le cas échéant les radicaux - O - et - OH -de formule (III) et (IV).

7. Procédé selon la revendication 6, caractérisé en ce que l'hydrazine et éventuellement l'eau est(sont) mise(s) en oeuvre en excès pouvant atteindre plusieurs fois la quantité théorique nécessaire pour la dite substitution.

8. Procédé selon l'une quelconque des revendications 6 et 7, caractérisé en ce que la quantité d'eau est au maximum d'une mole par mole d'hydrazine.

9. A titre de produits nouveaux, des polyhydrosilazanes comportant à la fois des motifs de formules (I) et/ou (II) et éventuellement (III) et/ou (IV) et des motifs de formule (V).

Office européen des brevets

# RAPPORT DE RECHERCHE EUROPEENNE

Numero de la demande

EP 89 40 2203

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| E | EP-A-0 304 239 (TOA NENRYO KOGYO)<br>* Revendications 1,3,9; page 4, lignes 1-49; page 5, lignes 13-48 * | 1-8 | C 08 G 77/62<br>C 08 G 77/54<br>C 04 B 35/00 |
| X | WO-A-8 606 377 (SRI INT.)<br>* Revendications 1,2,18,26-29; page 5, lignes 28-37; page 6, lignes 1-14; page 9, exemple 5; page 25, exemple 12 * | 1-8 | |
| A | EP-A-0 235 486 (RHONE-POULENC)<br>* Revendications 1,2,4; page 6, lignes 18-21 * | 1 | |
| A | WO-A-8 705 298 (SRI INT.)<br>* Revendications 1,2,10,11,12,14,15; page 20, lignes 8-14 et 20-27; page 23, lignes 17-29; page 24; page 32, lignes 12-17; page 46, exemple 8 * | 1 | |
| A,D | FR-A-2 190 764 (BAYER)<br>* Revendications 1,2,3; page 3, lignes 30-36; page 1, lignes 1-4 * | 1 | **DOMAINES TECHNIQUES RECHERCHES (Int. Cl.5)** |
| A,P | FR-A-2 625 211 (ATOCHEM)<br>* Revendications 1,5 * | 1 | C 08 G<br>C 04 B |

Le présent rapport a été établi pour toutes les revendications

| Lieu de la recherche | Date d'achèvement de la recherche | Examinateur |
|---|---|---|
| LA HAYE | 04-12-1989 | DEPIJPER R.D.C. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)